Europäisches Patentamt

European Patent Office

Office européen des brevets

(11) Publication number: **0 456 327 A2**

## EUROPEAN PATENT APPLICATION

(21) Application number: 91201083.2

(51) Int. Cl.⁵: **B32B 27/20**

(22) Date of filing: 06.05.91

(30) Priority: 07.05.90 US 520301

(43) Date of publication of application:
13.11.91 Bulletin 91/46

(84) Designated Contracting States:
AT BE CH DE ES FR GB IT LI NL

(71) Applicant: SHELL INTERNATIONALE
RESEARCH MAATSCHAPPIJ B.V.
Carel van Bylandtlaan 30
NL-2596 HR Den Haag(NL)

(72) Inventor: Ofstein, David Edward
106 Whistle Walk
Williamsburg, Virginia 23185(US)

(74) Representative: Bennett, David Arthur Horder
et al
Shell Internationale Research Maatschappij
B.V. Patents. Licensing & Trade Marks
Division P.O. Box 302
NL-2501 CH The Hague(NL)

(54) Plastic containers having a metallic appearance.

(57) A plastic container with a metallic appearance is formed from a laminate comprising at least two layers of plastic, an outer layer having blended therein a translucent nacreous colorant (suitably mica coated with metal oxide) and another layer having blended therein a colorant of deep color.

This invention relates to containers for food and other products of a plastic, whose outer appearance is metallic.

As more and more plastic packages find their way into the market-place, manufacturers have typically used colorful graphics printed on white containers. The graphics differentiate various products. An alternative approach being pursued by some includes pigmenting the container to achieve an eye-catching appearance. Such appearance effects can be obtained with bright or deep colors but an unusual eye-catching appearance could also be a metallic appearance.

Obviously, such an appearance can be achieved by using metals such as aluminum to make the container. The problem with aluminium is that it dents very easily, thus diminishing product appeal. A plastic container with a metallic-like appearance would avoid such problems.

However, an exact match for a metal in plastic is very difficult. The high reflectance from a metal container is unachievable in plastic materials. Furthermore, the problem with the approach of pigmenting the materials from which the container is made has been, and will continue to be, the dearth of pigments which have been approved by the food and drug administration for food contact, one of the highest volume uses for such containers. Heavy metal migratory pigments, such as cadmium-based pigments, simply cannot be used in such applications, whereas iron, aluminium and titanium, for example, are acceptable.

The invention relates to a plastic container with a metallic appearance which is formed from a laminate comprising at least two layers of plastic:- an outer layer which has blended therein a translucent nacreous colorant and another layer having blended into it a colorant of deep color. For many uses, including the packaging of foods, it is preferred that each of the colorants is a non-heavy metal non-migratory colorant and that there is a third white or clear (i.e. natural, unpigmented) inner layer to the container which is the layer which comes into contact with the contents of the container.

In preferred embodiments of the invention, an oxygen barrier material is positioned between the intermediate layer (containing the colorant of deep color) and the inner layer. Preferably the inner and outer layers are polypropylene polymers, such as homopolymers and copolymers of propylene, and the oxygen barrier layer is an ethylene vinyl alcohol copolymer.

The containers of the present invention may be produced by a variety of forming processes but thermoforming processes are generally preferred. Melt phase forming processes cause the loss of sheet gloss during the forming process. Other thermoforming processes may also cause loss of sheet gloss. In one such method, a thin sheet of plastic is introduced in the solid phase state, i.e., below the crystalline melting point and above the glass transition point, between a forming plug and a mold having an end opening, the forming plug is moved into the mold opening to carry a bulged portion of the sheet into the mold, and pressure fluid is introduced into the bulged portion of the sheet to form the article or container in the mold. The container is shiney but some gloss is lost.

In the present invention, the sheet which is formed as described above is a laminate of at least two different layers. The laminate may be formed by a variety of processes but coextrusion is preferred. The plastic material which forms the two colorant containing layers may be any plastic which can be colored and also formed into shapes. The preferred materials for use herein are polyolefin polymers, especially polypropylene homopolymers and copolymers with ethylene and other alpha olefins.

In order to achieve the advantages of the present invention, the outer layer of the container must have blended therein a translucent nacreous colorant. Such materials are also referred to as pearlescent colorants and they owe their effects to the partial transmittance and reflection of light. These materials have a plate-like particle shape and a high refractive index. Such colorants are sufficiently translucent to allow the color of the underlying layer to show through but the light reflecting off the various particles causes a visual effect which is a pearly iridescent luster. Such nacreous or pearlescent colorants may be made from fish scales, basic lead carbonate, bismuth oxychloride and lead hydrogen arsenate. The preferred nacreous colorant is mica, which creates a sparkly appearance, coated with metal oxides. Thus, layers of titanium dioxide are used for white pearlescence. Reds, blues, etc. are created by adding such colors to the white. Gold may be created by coating the mica particles with iron oxides and silver by coating them with aluminum oxides. Coated mica can be used in any transparent or translucent plastic and is particularly effective in vinyl polymers and polyolefins such as polyethylene and polypropylene. It is very important that the amount of added material be kept small or the layer will lose its translucence and become opaque.

In order to achieve the desired effect, it is necessary that there be an inner or intermediate layer of a plastic material in the laminate from which the container is formed which has blended therein a colorant of deep color. A deep color is one that has the appearance of having been produced by a high proportion of chromatic colorant with relatively little white. It can also be referred to as a strong or intense color. A chemical analogy which is sometimes used is concentration, i.e., a deep color is one that has a high concentration of color or hue. It is important that the deep color be deep enough to show through the translucent nacreous plastic layer and, in the cases when a white layer is used, be deep enough not to allow that color to bleed through or show through to the viewer of the external surface of the container.

In applications where it is important that the contents of the container do not come into contact with any undesirable materials present in the plastic layers, such as in food and medical applications, non-heavy metal non-migratory colorants should be used. Furthermore, the laminate from which the container is formed preferably has an inner layer of plastic which is white or natural/clear in order to prevent the color of the inner layer from showing through to the outside of the container.

In the preferred applications, a barrier material can be present in the laminate from which the container is made. The purpose of the barrier material is to prevent the passage of oxygen through the laminate in order to, for example, keep food packed within fresh. There are a number of oxygen barrier materials which may be used including nylon, polyvinylidiene chloride and polyester terephthalate, but the preferred materials are ethylene vinyl alcohol copolymers. Ethylene vinyl alcohol copolymers (EVOH) have excellent oxygen barrier properties and have the additional advantage of good processability.

Adhesive layers may be necessary to bond the various layers of the laminate together. The choice of the adhesive will depend upon the choice of the plastic materials which are used in the laminate. However, when polypropylene polymers and ethylene vinyl alcohol copolymers are used, it is preferred that the adhesive be a maleic anhydride-modified polypropylene adhesive because such adhesives are known to provide good bonding between polypropylene polymers and ethylene vinyl alcohol copolymers.

The thermoforming of such materials can easily result in scrap levels of more than 50%. Since some of these materials are very expensive and the scrap material, or regrind as it is often called, can only be sold for a fraction of the cost of the original materials, as much of the regrind as possible is reused in the structure in order to make plastic containers cost competitive with glass and metal containers. This regrind is typically used as an intermediate layer between the outer layer and the barrier layer and typically displaces a portion of the material of the outer protective layer. The regrind layer can be used symmetrically about a center layer (typically the barrier layer) or on one side.

When oxygen barrier containers are made according to the present process, it is preferred that the colorant of deep color be included in a regrind layer which is disposed between the oxygen barrier layer and the plastic layer which contains the translucent nacreous colorant. This structure is preferred because it is easier in the manufacturing process to pigment this layer.

The relative thicknesses of the layers of the laminate from which the container is made can be important. The layer containing the colorant of deep color must be thick enough so that when white color is used in the inner layer, it will not bleed through or show through to the outside. The layer containing the translucent nacreous colorant must not be so thick that the color from the intermediate layer does not show through. The barrier material layer must be thick enough to provide an effective barrier to the transmission of oxygen through the container wall. The thicknesses of the regrind layers are dependent upon the thicknesses of the inner and outer layers since the use of too much regrind can cause discontinuities in the surface of the thermoformed containers. The thickness of the inner layer is important only as a functional barrier to any potentially migratory components from the outer layers.

The blending of the colorants into the plastic layers can be accomplished by conventional means. The pigment can be added directly to molten plastic or a concentrate containing the colorant can be dry blended with the other plastic material which forms the layer in question.

Example 1

## Table 1
### 1st Pass color Match Structure

| Layer | Vol % |
|---|---|
| Gold Cap (60% PP/40% PE with an opaque gold with bronze flakes) | 14.3 |
| Regrind | 21.2 |
| "Admer" QF 500 (Maleic anhydride-PP adhesive) | 3.6 |
| "Eval" K102A (EVOH) | 13.0 |
| "Admer" QF500 | 3.5 |
| Regrind | |
| White Cap (60% PP/40% PE with a $TiO_2$-based blue-white. This white was used in all of the following examples as well) | 22.9 |

The procedure used in this color run was to line-out the process without pigment in the outside cap layer while the various layers were coextruded. Once the composition and profile were satisfactory, the gold color was started. When the gold colorant was introduced to the system, sheet quality deteriorated with parabolic lines visible on the surface. Poor dispersion was probably the cause although the gold pigment used a polypropylene carrier (.8.5 MF @ 110_C). The appearance improved by increasing the loading of the gold to 11:1. The gold color after extrusion was not acceptable because it appeared too greenish-brown. This was due to the bronze metal used in the pigment which is not thermally stable at coextrusion temperatures approaching 260_C. Containers were melt phase formed on a lab tray tool. The bleed-through was a problem and the gold layer was not sufficient, either in thickness or loading.

Example 2

The next trial evaluated five golds utilizing a structure containing "Eval" F EVOH made by EVALCA, Mitsui "Admer" QF500 adhesive, regrind and polypropylene homopolymer rather than the PP/PE blend used in example 1. The white cap layer was loaded at 25:1 (25 parts plastic and 1 part colorant). The gold cap layer was loaded at 9 to 14:1. The white regrind layer was pigmented with gold to simulate recycle and/or achieve opacity. The gold pigments and structure are detailed in Tables 2 and 3.

## Table 2

### 2nd-Pass Color Match Pigments

| Gold Pigment Type | Pigment No. | Opacity Rating[1] |
|---|---|---|
| All flakes coated with $Fe_2O_3$-opaque | 1 | 1 |
| Mica flakes coated with $Fe_2O_3$- borderline opaque and pearlescent | 2 | 2 |
| Non-pearlescent opaque | 3 | 3 |
| Pearlescent pigment | 4 | 4 |
| Mica coated with $Fe_2O_3$-pearlescent | 5 | 5 |

[1]visual rating:  1-most opaque, 5-least opaque

## Table 3

### 2nd-Pass Color Match Structure

| Layer | Material | Vol % |
|---|---|---|
| Outside Cap | PP w/gold | 25.0 |
| Regrind | w/gold + white | 18.3 |
| Glue | "Admer" QF500 | 4.4 |
| Barrier | "Eval" F101A | 8.4 |
| Glue | "Admer" QF500 | 3.8 |
| Regrind | w/gold + white | 19.0 |
| Inside Cap | PP w/white | 21.1 |

During evaluation of these five gold pigments, only no. 1 was opaque enough when used at 14:1 in the cap and 20:1 regrind layers. However, it was too brown. It was discovered by using the darker golds in the regrind layer at 15:1 loading and translucent (i.e. pearlescent) golds in the cap layer, a metallic-looking color resulted. The tests conducted are shown in Table 4.

## Table 4

### 2nd-Pass Test Results

| Cap Layer Gold | Conc. Loading | Re-grind Gold | Conc. Loading | Results |
|---|---|---|---|---|
| **1. One-gold system** | | | | |
| 1 | 14:1 | 1 | 20:1 | Opaque, but too brown. |
| 2 | 10:1 | 2 | 20:1 | White bleed-through. |
| 2 | 9:1 | 2 | 15:1 | Borderline. |
| 3 | 14:1 | 3 | 20:1 | Moisture in pigment; poor sheet quality. |
| 4 | 10:1 | 4 | 20:1 | White bleed-through. |
| 5 | 10:1 | 5 | 20:1 | White bleed-through. |
| **2. Two-gold system** | | | | |
| 2 | 14:1 | 1 | 15:1 | Opaque, too dark. |
| 4 | 14:1 | 1 | 15:1 | Metallic appearance achieved. |
| 5 | 12:1 | 1 | 15:1 | Metallic appearance achieved. |
| 4 | 9:1 | 2 | 15:1 | Borderline. |
| 5 | 9:1 | 2 | 15:1 | White bleed-through. |

Achieving opacity in the above one-gold pigment systems was a major problem but it was overcome by going to a two-gold pigment system. The other problem which was noted with the one-pigment systems was their dull appearance after thermoforming. During melt-phase forming, much of the sheet gloss is lost. In the one-pigment systems, this loss of gloss dulls the color and makes it appear less metallic. The two-gold pigment systems maintained their metallic appearance with the aid of the translucent cap layer even though sheet gloss was still lost.

### Example 3

Another attempt was made with one gold pigment. Samples were compared with the two gold system 5-1 from Table 4. The structures were similar to those used in Examples 1 and 2. The pigments and other materials used are shown in Tables 5 and 6. All the pigments were combination systems of mica and metal oxides to try to achieve color and opacity. Of the three pigments evaluated, two caused turbulence in the sheet, probably due to an incompatible carrier resin or dispersion problems. All three pigments resulted in golds which were too dissimilar to the control to be acceptable in terms of both overall color and metallic appearance. This proves that trying to combine pearlescence and opacity in one layer does not work as well as the claimed 2 pigment 2 layer system.

### Table 5

### One-Gold Pigment System
### Control Color Match

| Cap Layer Gold | Conc. Loading | Re-grind Gold | Conc. Loading | Results |
|---|---|---|---|---|
| 6 | 12:1 | same | 15:1 | Caused turbulence. Closest match to control but not opaque enough. |
| 7 | 12:1 | same | 15:1 | Caused turbulence. |
| 8 | 12:1 | same | 15:1 | Ran well. Too brownish-green. |

### Table 6

### Optimum Gold/White Structure

| Vol % | Layer | Description |
|---|---|---|
| 12 | Barrier | EVOH |
| 8 | Adhesive | "Admer" QF500 |
| 34 | Regrind | Regrind with 15:1 total loading |
| 30 | White Cap | PP at 15:1 total loading. |
| 16 | Gold Cap | PP at 12:1 total loading. |

Example 4

A coextrusion run was completed to study alternate base colors. Blue, green and red were substituted for the opaque gold. The same outer pearlescent gold, no. 5, was used in the structure which was similar to the structures used above. The actual materials used were:

<u>Table 7</u>

| Layer | Description | Vol % |
|---|---|---|
| Outer Gold Cap | 12:1 in PP | 16 |
| Regrind | 15:1 color* | 39 |
| Adhesive | "Admer" QF500 | 7 |
| Barrier | EVOH-based barrier | 8 |
| Inside White Cap | 15:1 in PP | 30 |

\* Colors in regrind are as follows:

   Red - Allied 13012RC

   Green - Georgia Pacific G22117EF

   Blue - not identified

Trays were produced on a lab former. The resulting containers had a metallic appearance with gold luster over the base color. The gold intensity varies depending on the angle at which the container is viewed. Although only a translucent, pearlescent gold was used herein, this concept could use any translucent, pearlescent color in the outer layer with an opaque inner layer to achieve endless variations for a final container appearance.

**Claims**

1. A laminate with a metallic appearance comprising at least two layers of plastic, an outer layer having blended therein a translucent nacreous colorant, an intermediate layer having blended therein a colorant of deep color, and optionally a third, inner layer.

2. A laminate as claimed in claim 1 wherein each of the colorants is a non-heavy metal non-migratory colorant.

3. Laminate as claimed in claim 1 or 2 wherein the nacreous colorant is mica coated with a metal oxide.

4. A laminate as claimed in claim 1, 2 or 3 comprising at least 4 layers, wherein a layer of an oxygen barrier materials is positioned between the intermediate layer and the inner layer.

5. A laminate as claimed in claim 4 wherein the outer layer is a polypropylene homopolymer or copolymer and the oxygen barrier layer is an ethylene vinyl alcohol copolymer.

6. A laminate as claimed in claim 4 or 5 wherein the intermediate layer is a regrind layer.

7. A laminate as claimed in claim 6 wherein a second regrind layer is positioned between said oxygen barrier layer and said inner layer.

8. A method for making a plastic container with a metallic appearance which comprises
   (a) blending a translucent nacreous colorant into a first plastic,
   (b) blending a colorant of deep color into a second plastic,
   (c) forming said first and second plastic into separate layers,
   (d) forming a laminate from said layers, and
   (e) forming said laminate into a container wherein said first plastic layer is on the outside of the container.

9. A method as claimed in claim 8, wherein each of the colorants is a non heavy metal non migratory colorant; the first and second plastics are laminated together with a layer of a third plastic, the second plastic layer being positioned between the other two layers; and the plastic laminate is formed into a container wherein the first plastic layer is on the outside of the container and the third layer is on the inside of the container.